(19) Europäisches Patentamt / European Patent Office / Office européen des brevets

(11) **EP 4 783 025 A1**

(12) **EUROPEAN PATENT APPLICATION**
published in accordance with Art. 153(4) EPC

(43) Date of publication:
**29.07.2026   Bulletin 2026/31**

(21) Application number: **24867077.0**

(22) Date of filing: **23.07.2024**

(51) International Patent Classification (IPC):
**G06F 16/2457** (2019.01)

(52) Cooperative Patent Classification (CPC):
**G06F 16/2457; G06Q 50/26;** G06Q 10/083

(86) International application number:
**PCT/CN2024/106924**

(87) International publication number:
**WO 2025/060660 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **22.09.2023   CN 202311230187**

(71) Applicants:
• **Beijing Jingdong Yuansheng Technology Co., Ltd.**
  **Beijing 100176 (CN)**
• **Beijing Jingbangda Trade Co., Ltd.**
  **Beijing 100080 (CN)**

(72) Inventors:
• **WANG, Zi**
  **Beijing 100176 (CN)**
• **WU, Jiayi**
  **Beijing 100176 (CN)**
• **LI, Xu**
  **Beijing 100176 (CN)**
• **QIAO, Xiaoqiang**
  **Beijing 100176 (CN)**

(74) Representative: **Page White Farrer**
**Bedford House**
**21a John Street**
**London WC1N 2BF (GB)**

(54) **METHOD AND SYSTEM FOR DETERMINING GREENHOUSE GAS EMISSION DATA, AND STORAGE MEDIUM**

(57)   The present disclosure relates to the technical field of carbon neutrality and the technical field of computers, and particularly relates to a method and system for determining greenhouse gas emission data, and a storage medium. The method in the present disclosure comprises: collecting transportation data of an order, wherein the transportation data of the order comprises: information of goods, configuration parameters of a transportation vehicle of one or more waybills corresponding to the order, travelling data of the transportation vehicle, and emission factors corresponding to the transportation vehicle; determining greenhouse gas emission data corresponding to each waybill among the one or more waybills according to the transportation data of the order; and on basis of the greenhouse gas emission data corresponding to each waybill generating greenhouse gas emission data of the order.

```
┌─────────────────────────────────────────┐
│   Collect transportation data of an order │──── S102
└─────────────────────────────────────────┘
                    │
                    ▼
┌─────────────────────────────────────────┐
│ Determine  greenhouse gas emission data   │──── S104
│ corresponding to each waybill of the one or more │
│ waybills according to the transportation data of the │
│                  order                    │
└─────────────────────────────────────────┘
                    │
                    ▼
┌─────────────────────────────────────────┐
│ Generate greenhouse gas emission data of the order │──── S106
│ according to the greenhouse gas emission data │
│        corresponding to each waybill       │
└─────────────────────────────────────────┘
```

Fig.1

EP 4 783 025 A1

# EP 4 783 025 A1

## Description

### CROSS-REFERENCE TO RELATED APPLICATIONS

The present application is based on and claims priority to CN application No. 202311230187.X, filed on September 22, 2023, the disclosure of which is incorporated herein by reference in its entirety.

### TECHNICAL FIELD

This disclosure relates to the technical field of carbon neutralization and the technical field of computers, in particular to a method and system for determining greenhouse gas emission data and a storage medium.

### BACKGROUND

The emission of greenhouse gases, which causes climate warming and various environmental problems, has been a global concern for a long time. For different industries, corresponding greenhouse gas emission standards and calculation methods are internationally established. The accurate calculation of the emission of greenhouse gases is beneficial to adjusting consumption-reduction and emission-reduction measures and reducing the emission of the greenhouse gases.

At present, the supply link transportation industry mainly depends on manually collecting data and calculating the emission of greenhouse gases.

### SUMMARY

According to some embodiments of the present disclosure, there is provided a method for determining greenhouse gas emission data including: collecting transportation data of an order, wherein the transportation data of the order comprises information of goods, configuration parameters of one or more transportation vehicles of one or more waybills corresponding to the order, travelling data of the one or more transportation vehicles, and one or more emission factors corresponding to the one or more transportation vehicles; determining greenhouse gas emission data corresponding to each waybill of the one or more waybills according to the transportation data of the order; and generating greenhouse gas emission data of the order according to the greenhouse gas emission data corresponding to each waybill.

In some embodiments, the configuration parameters of the transportation vehicle of each waybill comprise bearing capability information and an energy type of the transportation vehicle of each waybill and the determining greenhouse gas emission data corresponding to each waybill of the one or more waybills according to the transportation data of the order includes: determining greenhouse gas emission data of the transportation vehicle of each waybill according to the energy type of the transportation vehicle of each waybill, the travelling data of the transportation vehicle of each waybill and an emission factor corresponding to the transportation vehicle of each waybill; and determining the greenhouse gas emission data corresponding to each waybill according to the information of the goods and the bearing capacity information of the transportation vehicle of each waybill.

In some embodiments, the determining greenhouse gas emission data of the transportation vehicle of each waybill according to the energy type of the transportation vehicle of each waybill, the travelling data of the transportation vehicle of each waybill and an emission factor corresponding to the transportation vehicle of each waybill includes: determining a greenhouse gas emission model of the transportation vehicle of each waybill according to the energy type of the transportation vehicle of each waybill; and determining the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill.

In some embodiments, for each waybill, in a case where the energy type of the transportation vehicle of the waybill is fossil fuel, the greenhouse gas emission model of the transportation vehicle of the waybill comprises a carbon emission model of fossil fuel vehicle, and the determining the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill includes for each waybill, in a case where the energy type of the transportation vehicle of the waybill is the fossil fuel, determining at least one of a carbon dioxide emission, a methane emission or a nitrous oxide emission of the transportation vehicle of the waybill according to the travelling data of the transportation vehicle of the waybill and at least one of a carbon dioxide emission factor, a methane emission factor or a nitrous oxide emission factor corresponding to the transportation vehicle of the waybill, by adopting the carbon emission model of fossil fuel vehicle; and determining a greenhouse gas emission of the transportation vehicle of the waybill according to at least

EP 4 783 025 A1

one of the carbon dioxide emission, the methane emission or the nitrous oxide emission of the transportation vehicle of the waybill.

In some embodiments, the travelling data of the transportation vehicle of the waybill includes a travelling distance and a urea consumption of the transportation vehicle of the waybill, and the carbon dioxide emission of the transportation vehicle of the waybill is determined by: determining a first emission of carbon dioxide of the transportation vehicle of the waybill according to a product of the travelling distance of the transportation vehicle of the waybill and the carbon dioxide emission factor corresponding to the transportation vehicle of the waybill; determining a second emission of carbon dioxide of the transportation vehicle of the waybill according to a product of the urea consumption of the transportation vehicle of the waybill and a conversion coefficient; and determining the carbon dioxide emission of the transportation vehicle of the waybill according to the first emission and the second emission of carbon dioxide of the transportation vehicle of the waybill.

In some embodiments, for the transportation vehicle of each waybill, the carbon dioxide emission factor corresponding to the transportation vehicle is determined according to a fossil fuel consumption per unit distance of the transportation vehicle, and liquid density, net calorific value, carbon content per calorific value, and carbon oxidation rate of the fossil fuel used by the transportation vehicle.

In some embodiments, the travelling data of the transportation vehicle of the waybill includes: a travelling distance of the transportation vehicle of the waybill, and the methane emission of the transportation vehicle of the waybill is determined by: determining the methane emission of the transportation vehicle of the waybill according to a product of the travelling distance of the transportation vehicle of the waybill, the methane emission factor corresponding to the transportation vehicle of the waybill and global warming potential of methane; and the nitrous oxide emission of the transportation vehicle of the waybill is determined by: determining the nitrous oxide emission of the transportation vehicle of the waybill according to a product of the travelling distance of the transportation vehicle of the waybill, the nitrous oxide emission factor corresponding to the transportation vehicle of the waybill and global warming potential of nitrous oxide.

In some embodiments, for each waybill, in a case where the energy type of the transportation vehicle of the waybill is electricity, the greenhouse gas emission model of the transportation vehicle of the waybill includes a carbon emission model of electric vehicle, the configuration parameters of the transportation vehicle of the waybill comprise an electricity consumption of the transportation vehicle of the waybill, and the determining the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill includes: for each waybill, in a case where the energy type of the transportation vehicle of the waybill is electricity, determining the greenhouse gas emission of the transportation vehicle of the waybill according to a product of the electricity consumption of the transportation vehicle of the waybill and an electric vehicle emission factor, by adopting the carbon emission model of electric vehicle.

In some embodiments, the method further includes: for each waybill, in a case where the energy type of the transportation vehicle of the waybill is electricity, comparing the greenhouse gas emission of the transportation vehicle of the waybill with a greenhouse gas emission of a reference fossil fuel vehicle, to determine a greenhouse gas emission reduction of the transportation vehicle of the waybill, wherein bearing capacity information of the reference fossil fuel vehicle is same with that of the transportation vehicle of the waybill; and determining a greenhouse gas emission reduction of the waybill according to the greenhouse gas emission reduction of the transportation vehicle of the waybill.

In some embodiments, the information of the goods includes: a volume and a weight of the goods, the bearing capacity information includes capacity and load, and the determining the greenhouse gas emission data corresponding to each waybill according to the information of the goods and the bearing capacity information of the transportation vehicle of each waybill includes: for each waybill, determining a first ratio of the volume of the goods to the capacity of the transportation vehicle of the waybill; determining a second ratio of the weight of the goods to the load of the transportation vehicle of the waybill; determining an emission ratio coefficient according to the first ratio and the second ratio; and determining the greenhouse gas emission data corresponding to the waybill according to the greenhouse gas emission data of the transportation vehicle of the waybill and the emission ratio coefficient.

In some embodiments, the collecting transportation data of an order includes: collecting information of the order, where the information of the order comprises the information of the goods and one or more serial numbers of the one or more waybills corresponding to the order; information of the one or more waybills according to the one or more serial numbers of the one or more waybills, and associating the order with the one or more waybills, where different waybills correspond to different transportation sections of the order, and the information of each waybill includes configuration parameters and travelling data of the transportation vehicle of the waybill; acquiring an emission factor corresponding to the transportation vehicle of each waybill according to the configuration parameters of the transportation vehicle of each waybill; and generating the transportation data of the order.

In some embodiments, the generating greenhouse gas emission data of the order according to the greenhouse gas emission data corresponding to each waybill comprises at least one of: adding the greenhouse gas emission data corresponding to each waybill to determine total greenhouse gas emission of the order; or sequencing the greenhouse gas

3

emission data corresponding to each waybill according to a transportation route of the order to form greenhouse gas emission track data of the order.

In some embodiments, the generating greenhouse gas emission data of the order according to the greenhouse gas emission data corresponding to each waybill includes: determining a greenhouse gas emission reduction of the order according to the greenhouse gas emission reduction of the transportation vehicle of each waybill.

In some embodiments, the method further includes at least one of: checking an order of magnitude of the greenhouse gas emission data of the order, to determine whether the order of magnitude of the greenhouse gas emission data of the order meets a preset order of magnitude; or checking the greenhouse gas emission data corresponding to each waybill, to determine whether the data is duplicated or missing.

In some embodiments, the method further includes at least one of: displaying the greenhouse gas emission data of the order; displaying the information of the goods; displaying a transportation route of the order; displaying a type of the one or more transportation vehicles of the one or more waybills corresponding to the order; or displaying the transportation data of the order.

In some embodiments, the method further includes: acquiring configuration parameters of various transportation vehicles, to generate a transportation vehicle database.

In some embodiments, the method further includes: acquiring emission factors of various greenhouse gases; and generating emission factors corresponding to various transportation vehicles according to configuration parameters of various transportation vehicles, to construct an emission factor database.

According to other embodiments of the present disclosure, there is provided a system for determining greenhouse gas emission data, including: a data collection module configured to collect transportation data of an order, wherein the transportation data of the order comprises information of goods, configuration parameters of one or more transportation vehicles of one or more waybills corresponding to the order, travelling data of the one or more transportation vehicles, and one or more emission factors corresponding to the one or more transportation vehicles; an emission data calculation module configured to determine greenhouse gas emission data corresponding to each waybill of the one or more waybills according to the transportation data of the order; and an emission data output module configured to generate greenhouse gas emission data of the order according to the greenhouse gas emission data corresponding to each waybill.

According to still other embodiments of the present disclosure, there is provided a system for determining greenhouse gas emission data, including: a processor; and a memory coupled to the processor, configured to store instructions which, when executed by the processor, cause the processor to perform the method for determining greenhouse gas emission data as in any of the embodiments of the present disclosure.

According to still further embodiments of the present disclosure, there is provided a computer-readable storage medium having stored thereon a computer program, which, when executed by a processor, cause the processor to implement the method for determining greenhouse gas emission data as in any of the embodiments of the present disclosure.

According to still further embodiments of the present disclosure, there is provided a computer program product including: instructions which, when executed by a processor, cause the processor to perform the method for determining greenhouse gas emission data as in any of the embodiments of the present disclosure.

According to still further embodiments of the present disclosure, there is provided a computer program including: instructions which, when executed by a processor, cause the processor to perform the method for determining greenhouse gas emission data as in any of the embodiments of the present disclosure.

Other features of the present disclosure and advantages thereof will become apparent from the following detailed description of exemplary embodiments thereof, which proceeds with reference to the accompanying drawings.

## BRIEF DESCRIPTION OF THE DRAWINGS

In order to more clearly illustrate the embodiments of the present disclosure or the technical solutions in the prior art, the drawings used in the description of the embodiments or the prior art will be briefly described below, and it is obvious that the drawings in the following description are only some embodiments of the present disclosure, and other drawings can be obtained by those skilled in the art from these drawings without creative efforts.

FIG. 1 shows a flow diagram of a method for determining greenhouse gas emission data, according to some embodiments of the present disclosure.

FIG. 2 shows a schematic block diagram of a system for determining greenhouse gas emission data, according to some embodiments of the present disclosure.

FIG. 3 shows a schematic block diagram of a system for determining greenhouse gas emission data, according to further embodiments of the present disclosure.

FIG. 4 shows a schematic block diagram of a system for determining greenhouse gas emission data, according to further embodiments of the present disclosure.

FIG. 5 shows a schematic block diagram of a system for determining greenhouse gas emission data, according to still further embodiments of the present disclosure.

## DETAILED DESCRIPTION

The technical solutions in the embodiments of the present disclosure will be described clearly and completely with reference to the drawings in the embodiments of the present disclosure, and it is obvious that the embodiments described are only some embodiments of the present disclosure, rather than all embodiments. The following description of at least one exemplary embodiment is merely illustrative in nature and is in no way intended to limit the disclosure, its application, or uses. All other embodiments, which can be derived by a person skilled in the art from the embodiments disclosed herein without making any creative effort, shall fall within the protection scope of the present disclosure.

The inventor finds that: the supply link transportation industry mainly depends on manually collecting data and calculating the emission of greenhouse gases, resulting in inaccuracy, and the calculation is mainly directed to greenhouse gas emission of whole vehicle transportation and bulk transportation, resulting in being unable to calculate the greenhouse gas emission in an order package dimension.

One technical problem to be solved by the present disclosure is: to determine greenhouse gas emission data in an order dimension and to improve the accuracy of the determination.

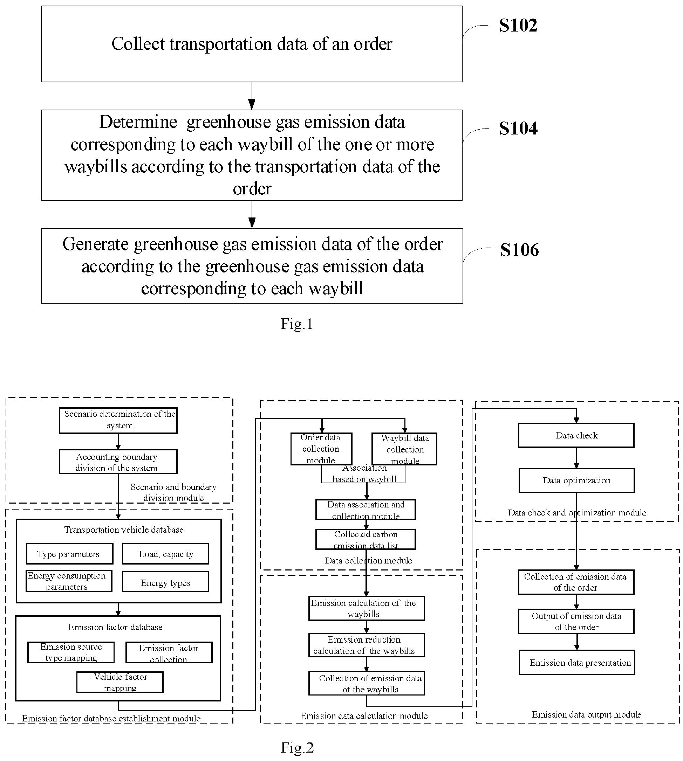

The present disclosure provides a method for determining greenhouse gas emission data, which is described below with reference to FIGS. 1-2.

FIG. 1 is a flow diagram of a method for determining greenhouse gas emission data, according to some embodiments of the present disclosure. As shown in FIG. 1, the method of this embodiment includes: steps S102 to S106.

In step S102, transportation data of an order is collected.

In some embodiments, the transportation data of the order comprises information of goods, configuration parameters of one or more transportation vehicles of one or more waybills corresponding to the order, travelling data of the one or more transportation vehicles, and one or more emission factors corresponding to the one or more transportation vehicles. The transportation vehicle is, for example, a vehicle.

For example, in the field of supply link transportation, there is a mode that an order corresponds to multiple waybills, that is, one order corresponds to multiple transportation sections, and finally reaches a destination. Different waybills correspond to different transportation sections of the order and may employ a different transportation vehicle. For example, the information of the goods includes: v, etc.; the configuration parameters of each of the one or more transportation vehicles include, for example: a type parameter, bearing capacity information, an energy type and the like, where the bearing capacity information includes capacity, load and the like; the travelling data of the one or more transportation vehicles includes a travelling distance, a material consumption and the like; the one or more emission factors corresponding to the one or more transportation vehicles correspond to the one or more energy types of the one or more transportation vehicles.

In some embodiments, information of the order is collected, where the information of the order includes: the information of the goods and one or more serial numbers of one or more waybills corresponding to the order; information of the one or more waybills is acquired according to the one or more serial numbers of the one or more waybills, and the order is associated with the one or more waybills, where different waybills correspond to different transportation sections of the order, and the information of each waybill includes: configuration parameters and travelling data of the transportation vehicle of the waybill; an emission factor corresponding to the transportation vehicle of each waybill is acquired according to the configuration parameters of the transportation vehicle of each waybill; and the transportation data of the order is generated. The information of the order may also include information such as a delivery time and a receipt time, and is not limited to the illustrated example.

The method for determining greenhouse gas emission data can be executed by a system for determining greenhouse gas emission data, and information of each order can be collected through an interface in an order system, and then information of a waybill can be collected through an interface of a waybill system.

As shown in FIG. 2, the system for determining greenhouse gas emission data can first specify a scope boundary and define a scenario according to a greenhouse gas emission accounting standard (e.g., IOS14064 standard). For example, a solution for carbon footprint calculation is provided for a scenario involving circulation links in supply chain logistics. The system is mainly directed to all greenhouse gas emissions possibly generated by all-category vehicle transportation behaviors involved in all links such as transportation, distribution and the like of logistics service providers in upstream and downstream processes of an enterprise supply chain/value chain. By means of a refined path range calculation and a emission path calibration, a greenhouse gas emission generated in the above range is accurately calculated, and finally an acquisition and calculation of end-to-end carbon footprints of all-category transportation vehicles under a supply chain logistics transportation scenario are focused on. The accounting boundary of the system for determining greenhouse gas emission data is divided as follows: the accounting boundary is the greenhouse gas emission generated by the transportation vehicles through processes of fossil fuel combustion, tail gas purification urea consumption and the like, in the processes of transportation and distribution in all circulation links, where if a transportation vehicle is owned by an enterprise, the part of emission is emission in Scope 1, and if a transportation vehicle is owned by a third-party carrier, the part of emission is emission in Scope 3.

In some embodiments, configuration parameters of various transportation vehicles are acquired, to generate a transportation vehicle database. In some embodiments, emission factors of various greenhouse gases are acquired; and emission factors corresponding to various transportation vehicles are generated according to the configuration parameters of the various transportation vehicles, to construct an emission factor database.

As shown in FIG. 2, an emission factor database establishing module in the system for determining greenhouse gas emission data may establish a transportation vehicle database in advance, including type parameters, capacity, load, energy consumption parameters, energy types, and the like of various transportation vehicles. The emission factor database can be established in advance, where different emission factors are mapped according to various emission sources, and various emission factors can be gathered and collected. For different transportation vehicles, emission factors corresponding to various transportation vehicles can be generated in advance according to the configuration parameters of the transportation vehicles, for the convenience of subsequent determination of greenhouse gas emission data. The emission factors corresponding to the transportation vehicle can be used to indicate the greenhouse gas emission of the transportation vehicle per unit distance or per unit energy consumption. One type of transportation vehicle can correspond to a plurality of emission factors, and the plurality of emission factors respectively correspond to different greenhouse gas types.

The system for determining greenhouse gas emission data can collect all-category transportation vehicle data in several ways, establish a one-to-one vehicle greenhouse gas emission factor database according to each vehicle type, and formulate greenhouse gas emission factors according to different vehicle types, so as to establish the all-vehicle greenhouse gas emission factor database. In the process of establishing a transportation vehicle database, transportation vehicle data are collected, which mainly includes collecting common land transportation vehicle models, vehicle types, specific configuration parameters and the like, so as to establish a vehicle data dictionary, and facilitate accurate transportation vehicle matching for different transportation scenarios, thereby determining different greenhouse gas emission calculation factors for different vehicles.

In the process of establishing the greenhouse gas emission factor database, according to different emission source types, an emission source factor collection is established according to a greenhouse gas emission accounting standard (for example, ISO14064-1 national greenhouse gas emission standard), and in view of that different energy sources such as diesel, new energy sources will generate greenhouse gases such as methane, nitrous oxide, carbon dioxide, a special emission factor model is established according to different vehicle types.

A data collection module in the system for determining greenhouse gas emission data collects business information of each transportation section from the beginning of transportation behavior of an order to the final state of proper delivery (properly delivering goods) in the whole chain, and finally forms a data list (namely, transportation data of the order) for determining greenhouse gas emission in a supply chian transportation link. The collected data of the order is associated with data of waybills, and in conjunction with the transportation vehicle database and the emission factor database, is classified, processed, integrated and gathered according to the specific supply chain transportation scenario, thereby forming a data list for determining the greenhouse gas emission and facilitating operation and calculation of a subsequent greenhouse gas emission calculation module. Specific supply chain transportation scenarios include, for example: B2B (Business-to-Business), O2O (Online To Offline), B2C (Business to Consumer), warehouse transfer and other logistics transportation scenarios.

In step S104, greenhouse gas emission data corresponding to each waybill of the one or more waybills is determined according to the transportation data of the order.

In some embodiments, the configuration parameters of the transportation vehicle of each waybill comprise bearing capability information and an energy type of the transportation vehicle of each waybill. Greenhouse gas emission data of the transportation vehicle of each waybill is determined according to the energy type of the transportation vehicle of each waybill, the travelling data of the transportation vehicle of each waybill and an emission factor corresponding to the transportation vehicle of each waybill; and the greenhouse gas emission data corresponding to each waybill is determined according to the information of the goods and the bearing capacity information of the transportation vehicle of each waybill.

As shown in FIG. 2, the greenhouse gas emission data of each waybill can be calculated by an emission data calculation module in the system for determining greenhouse gas emission data according to the data list (namely, the transportation data of the order) for determining greenhouse gas emission. From a data base list, waybill number, configuration parameters of a transportation vehicle on each section, travelling data, address information of an origin and destination of each section of the chain and the like are acquired, in conjunction with the information of the goods and the bearing capacity information of the transportation vehicle of each waybill, the greenhouse gas emission data are accurately distributed to the dimensionality of the waybill, thereby quantifying the carbon footprint data of the waybill.

In some embodiments, a greenhouse gas emission model of the transportation vehicle of each waybill is determined according to the energy type of the transportation vehicle of each waybill; and the greenhouse gas emission data of the transportation vehicle of each waybill is determined according to the travelling data of the transportation vehicle of each waybill and the emission factor corresponding to the transportation vehicle of each waybill, by adopting the greenhouse gas emission model of the transportation vehicle of each waybill.

Different energy types correspond to different greenhouse gas emission models, and these greenhouse gas emission models can be formulated according to relevant standards.

In some embodiments, for each waybill, in a case where the energy type of the transportation vehicle of the waybill is fossil fuel, the greenhouse gas emission model of the transportation vehicle of the waybill comprises a carbon emission model of fossil fuel vehicle. For each waybill, in a case where the energy type of the transportation vehicle of the waybill is the fossil fuel, at least one of a carbon dioxide emission, a methane emission or a nitrous oxide emission of the transportation vehicle of the waybill is determined according to the travelling data of the transportation vehicle of the waybill and at least one of a carbon dioxide emission factor, a methane emission factor or a nitrous oxide emission factor corresponding to the transportation vehicle of the waybill, by adopting the carbon emission model of fossil fuel vehicle; and a greenhouse gas emission of the transportation vehicle of the waybill is determined according to at least one of the carbon dioxide emission, the methane emission or the nitrous oxide emission of the transportation vehicle of the waybill.

For each waybill, in a case where the energy type of the transportation vehicle of the waybill is the fossil fuel, the one or more emission factors corresponding to the transportation vehicle of the waybill includes at least one of the carbon dioxide emission factor, the methane emission factor, and the nitrous oxide emission factor corresponding to the transportation vehicle of the waybill.

For example, for each waybill, the greenhouse gas emission of the transportation vehicle of the waybill is a sum of the carbon dioxide emission, the methane emission, and the nitrous oxide emission of the transportation vehicles of the waybill.

In some embodiments, the travelling data of the transportation vehicle of the waybill comprises a travelling distance and a urea consumption of the transportation vehicle of the waybill, and the carbon dioxide emission of the transportation vehicle of the waybill is determined by: determining a first emission of carbon dioxide of the transportation vehicle of the waybill according to a product of the travelling distance of the transportation vehicle of the waybill and the carbon dioxide emission factor corresponding to the transportation vehicle of the waybill; determining a second emission of carbon dioxide of the transportation vehicle of the waybill according to a product of the urea consumption of the transportation vehicle of the waybill and a conversion coefficient; and determining the carbon dioxide emission of the transportation vehicle of the waybill according to the first emission and the second emission of carbon dioxide of the transportation vehicle of the waybill.

The emission of greenhouse gases in the vehicle travelling process mainly consists of two part: energy combustion and tail gas purification urea consumption. The first emission represents an emission of carbon dioxide generated by the energy combustion, and the second emission represents an emission equivalent of carbon dioxide generated by the tail gas purification urea consumption.

In some embodiments, for the transportation vehicle of each waybill, the carbon dioxide emission factor corresponding to the transportation vehicle is determined according to a fossil fuel consumption per unit distance of the transportation vehicle, and liquid density, net calorific value, carbon content per calorific value, and carbon oxidation rate of the fossil fuel used by the transportation vehicle.

For example, the carbon dioxide emission factor corresponding to the transportation vehicle is a product of the fossil fuel consumption per unit distance of the transportation vehicle, and the liquid density, net calorific value, carbon content per calorific value, and carbon oxidation rate of the fossil fuel used by the transportation vehicle, and a first coefficient.

In some embodiments, for each waybill, the travelling data of the transportation vehicle of the waybill comprises a travelling distance of the transportation vehicle of the waybill, and the methane emission of the transportation vehicle of the waybill is determined by: determining the methane emission of the transportation vehicle of the waybill according to a product of the travelling distance of the transportation vehicle of the waybill, the methane emission factor corresponding to the transportation vehicle of the waybill and global warming potential of methane; and the nitrous oxide emission of the transportation vehicle of the waybill is determined by: determining the nitrous oxide emission of the transportation vehicle of the waybill according to a product of the travelling distance of the transportation vehicle of the waybill, the nitrous oxide emission factor corresponding to the transportation vehicle of the waybill and global warming potential of nitrous oxide.

For example, for each waybill, the product of the travelling distance of the transportation vehicle of the waybill, the methane emission factor corresponding to the transportation vehicle of the waybill, the global warming potential of methane, and a second coefficient, is taken as the methane emission of the transportation vehicle of the waybill.

For example, for each waybill, the nitrous oxide emission of the transportation vehicle of the waybill is determined as the product of the travelling distance of the transportation vehicle of the waybill, the nitrous oxide emission factor corresponding to the transportation vehicle of the waybill, the global warming potential of nitrous oxide, and a third coefficient.

For example, for each waybill, in a case where the energy type of the transportation vehicle of the waybill is fossil fuel, the greenhouse gas emission model of the transportation vehicle of the waybill may be represented as $E_{fossil\ fuel} = E1+E2+E3+E4$

$E_{Fossil\ fuel}$ is a greenhouse gas emission of a transportation vehicle of a waybill, in units of **ton $CO_2$ ($tCO_2$)$E_1$** is **$CO_2$** emission generated by energy combustion of the transportation vehicle of the waybill, i.e. first emission, in units of **ton $CO_2$ ($tCO_2$)$E_2$** is CH4 emission generated by energy combustion of the transportation vehicle of the waybill, in units of **ton $CO_2$ ($tCO_2$)$E_3$** is **$N_2O$** units of **ton $CO_2$ ($tCO_2$)$E_4$** is greenhouse gas emission generated in tail gas purification urea consumption, with a unit of **ton $CO_2$ ($tCO_2$)E, $E_1$, $E_2$, $E_3$ and $E_4$** are all in units of **ton $CO_2$**, that is, emissions of various greenhouse gases are measured with carbon dioxide equivalents.

$E_1 = K$ value $\times$ carbon content per calorific value $\times$ carbon oxidation rate $\times$ $44/12 \times 10^{-5}$.

**K** is a travelling distance in units of kilometers (km) and the fossil fuel may include gasoline, diesel, liquefied natural gas, natural gas, and the like. The fuel consumption per hundred kilometers is in units of liters per hundred kilometers or cubic meters per hundred kilometers ($L/100\ km$ or $m^3/100\ km$). For liquefied fuels, for example, liquid density of gasoline is 0.73 ton/cubic meter; liquid density of the diesel is 0.84 ton/cubic meter, liquid density of liquefied natural gas is 0.45 ton/cubic meter. For gaseous fuels, liquid density is 0.1 ton/cubic meter. The net calorific value, the carbon content per calorific value and the carbon oxidation rate have different values for different fuels, and the existing standards can be referred to, so that the details are not repeated. $44/12 \times 10^{-5}$ denotes the first coefficient. Fuel consumption per hundred kilometers $\times$ liquid density $\times$ net calorific value $\times$ carbon content per calorific value $\times$ carbon oxidation rate $\times$ $44/12 \times 10^{-5}$, as a whole, can be taken as the carbon dioxide emission factor of the transportation vehicle. Because the fuel consumption per hundred kilometers of different vehicles is different, and the liquid density, net calorific value, carbon content per calorific value, carbon oxidation rate and the like of different fuels are different, respective emission factors of each transportation vehicle can be predetermined and stored in an emission factor database, thereby facilitating the subsequent calculation process.

$$E_2 = K \times EF_{CH_4} \times GWP_{CH_4} \times 10^{-9}, \quad E_3 = K \times EF_{N_2O} \times GWP_{N_2O} \times 10^{-9}.$$

**K** is a travelling distance in units of kilometer (km), $EF_{CH_4}$ is the methane emission factor of the transportation vehicle, and $EF_{N_2O}$ is the nitrous oxide emission factor of the transportation vehicle, and can be acquired from the emission factor database. $GWPCH_4$, $GWPN_2OGWPCH4N_2O$ coefficient and the third coefficient are $10^{-9}$.

$$E_4 = M \times P \times 12/60 \times 44/12 \times 10^{-3}.$$

**M** is mass of urea additive consumed by the transportation vehicle in units of kilogram (kg), **P** is mass ratio of urea in the urea additive, and $M \times P$ is urea consumption of the transportation vehicle. $12/60 \times 44/12 \times 10^{-3}$ is the conversion coefficient.

In some embodiments, for each waybill, a first ratio of the volume of the goods to the capacity of the transportation vehicle of the waybill is determined; a second ratio of the weight of the goods to the load of the transportation vehicle of the waybill is determined; an emission ratio coefficient is determined according to the first ratio and the second ratio; and the greenhouse gas emission data corresponding to the waybill is determined according to the greenhouse gas emission data of the transportation vehicle of the waybill and the emission ratio coefficient.

For example, a maximum value among the first ratio and the second ratio is selected as the emission ratio coefficient, or the two are weighted and summed as the emission ratio coefficient. In a case where the energy type of the transportation vehicle of the waybill is fossil fuel, the greenhouse gas emission data corresponding to the waybill may be expressed as $\alpha E_{fossil\ fuel}$. A product of the maximum capacity, the maximum load of the transportation vehicle and a preset ratio may be taken as the capacity and load of the transportation vehicle, respectively, for example, the preset ratio is 80%.

In some embodiments, for each waybill, in a case where the energy type of the transportation vehicle of the waybill is electricity, the greenhouse gas emission model of the transportation vehicle of the waybill comprises a carbon emission model of electric vehicle, the configuration parameters of the transportation vehicle of the waybill comprise an electricity consumption of the transportation vehicle of the waybill. For each waybill, in a case where the energy type of the transportation vehicle of the waybill is electricity, the greenhouse gas emission of the transportation vehicle of the waybill is determined according to a product of the electricity consumption of the transportation vehicle of the waybill and an electric vehicle emission factor, by adopting the carbon emission model of electric vehicle.

For example, for each waybill, in a case where the energy type of the transportation vehicle of the waybill is electricity, a product of the electricity consumption of the transportation vehicle of the waybill, the electric vehicle emission factor, and a fourth coefficient is taken as the greenhouse gas emission of the transportation vehicle of the waybill.

For each waybill, in a case where the energy type of the transportation vehicle of the waybill is electricity, the greenhouse gas emission of the transportation vehicle of the waybill is $E_{electricity}$ = electricity consumption $\times$ electric vehicle emission factor $\times$ 10$^{-3}$.

The electricity consumption can be in units of kilowatt-hour (**kw.h**), and for different electric vehicles, corresponding electric vehicle emission factors will be different and can be acquired from the emission factor database.

For each waybill, in case where the energy type of the transportation vehicle of the waybill is electricity, the greenhouse gas emission of the waybill is $\alpha E_{electricity}$.

Since the electric vehicle can reduce the emission of greenhouse gases, the greenhouse gas emission reduction can be determined for the electric vehicle. In some embodiments, for each waybill, in a case where the energy type of the transportation vehicle of the waybill is electricity, the greenhouse gas emission of the transportation vehicle of the waybill is compared with greenhouse gas emission of a reference fossil fuel vehicle, to determine a greenhouse gas emission reduction of the transportation vehicle of the waybill, where bearing capacity information of the reference fossil fuel vehicle is same with that of the transportation vehicle of the waybill; and a greenhouse gas emission reduction of the waybill is determined according to the greenhouse gas emission reduction of the transportation vehicle of the waybill.

The reference fossil fuel vehicle, such as a diesel vehicle, can be determined by adopting the greenhouse gas emission model of the fossil fuel vehicle in the foregoing embodiments, which is not described in detail. If the transportation vehicle of the waybill is a new energy vehicle (electric vehicle), the system triggers an emission reduction calculation module, to take a difference between the greenhouse gas emission of the transportation vehicle of the waybill and the greenhouse gas emission of the reference fossil fuel vehicle as the greenhouse gas emission reduction of the transportation vehicle of the waybill. Further, the greenhouse gas emission reduction of the waybill can be determined according to the emission ratio coefficient and the greenhouse gas emission reduction of the transportation vehicle of the waybill.

In step S106, greenhouse gas emission data of the order is generated according to the greenhouse gas emission data corresponding to each waybill.

Steps S104 and S106 may be combined, i.e. greenhouse gas emission data of the order is generated according to the transportation data of the order. It is not needed to first separately determine the greenhouse gas emission data of each waybill, but determines the greenhouse gas emission data of the order directly according to a sum of greenhouse gas emission data of all transportation vehicles on the whole transportation route of the order.

In some embodiments, the greenhouse gas emission data corresponding to each waybill is summed to determine the total greenhouse gas emission of the order.

In some embodiments, the greenhouse gas emission data corresponding to each waybill is sequenced according to transportation route of the order to form greenhouse gas emission track data of the order, which may be referred to as carbon emission footprints of the order.

In some embodiments, the greenhouse gas emission reduction of the order is determined according to the greenhouse gas emission reduction of the transportation vehicle of each waybill.

In some embodiments, checking the greenhouse gas emission data of each waybill and the order, includes at least one of: checking an order of magnitude of the greenhouse gas emission data of the order, to determine whether the order of magnitude of the greenhouse gas emission data of the order meets a preset order of magnitude; or checking the greenhouse gas emission data corresponding to each waybill, to determine whether the data is duplicated or missing. If the data is duplicated, the duplicated data is deleted, thereby optimizing the data.

As shown in FIG. 2, the system for determining greenhouse gas emission data may include a data check and optimization module for data check and data optimization, configured to perform data integration calibration on the greenhouse gas emission data in a waybill dimension and the emission reduction data, output by the greenhouse gas emission calculation module. The calibration includes rechecking related results of the transportation data. Firstly, whether the order of magnitude of the related results meets a preset order of magnitude is determined, if so, each piece of the greenhouse gas emission data is checked one by one to check duplicated data and faulty data. For the duplicated data, the system will automatically reject the duplicated data according to set logic rules, avoiding duplicated calculation of greenhouse gas emission. For the faulty data, the system will judge whether the calculation of greenhouse gas emission can be carried out according to a type of missing data, if not, the system will return null, and the front end will present data missing, to be distinguished from greenhouse gas emission 0.

In some embodiments, displaying related data of the order includes at least one of: displaying the greenhouse gas emission data of the order; displaying the information of the goods; displaying a transportation route of the order; displaying one or more types of the one or more transportation vehicles of the one or more waybills corresponding to the order; or displaying the transportation data of the order.

Time information of the order can also be displayed, such as delivery time, receipt time and the like, and multi-dimensional information presentation can be performed as actually required according to the transportation vehicle database, the emission factor database, and the collected information of the order and one or more waybills.

As shown in FIG. 2, the system for determining greenhouse gas emission data may include: an aggregation of emission data of the order. That is correct data output by the data check and optimization module is finally aggregated, i.e.

the greenhouse gas emission of each waybill corresponding to each section of the transportation route is accumulated and summed according to the order dimension and emission reduction data accumulated in the order dimension to and finally form carbon footprint data of all-chain transportation in the order dimension, thereby forming carbon footprint data in a supply chain transportation scenario in the order dimension, to be output through the emission data output module. Carbon footprint data in the supply chain transportation scenario of an end-to-end chain of the order is formed according to the calibrated carbon footprint data, and track information of the end-to-end chain of the order is presented on the platform.

The transportation data of the order automatically collected in the above embodiment includes: the information of goods, the configuration parameters of one or more transportation vehicles of one or more waybills corresponding to the order, the travelling data of the one or more transportation vehicles, and the one or more emission factors corresponding to the one or more transportation vehicles, thereby automatically determining the greenhouse gas emission data corresponding to each waybill according to the collected data, and determining greenhouse gas emission data of the order according to the greenhouse gas emission data corresponding to each waybill, so that greenhouse gas emission data can be determined in the order dimension. The method of the embodiment can achieve automatic collection of data, and automatic calculation of greenhouse gas emission data, without manual intervention in the whole process, improving the accuracy and efficiency of determining greenhouse gas emission data in the order dimension.

In the embodiment, the vehicle database and the associated emission factor database are established in the system for determining greenhouse gas emission data, and by establishing the two data mapping databases, accurate calculation of greenhouse gas emission factors of different types of vehicles can be realized, thereby facilitating quantitative greenhouse gas emission in the order dimension. In a logistics supply chain transportation scenario, all-process digitization of greenhouse gas emission calculation in the order dimension is achieved, and by means of associative and interactive verification across various nodes, the greenhouse gas emission in the order dimension is finally calculated digitally, seamlessly and in real time.

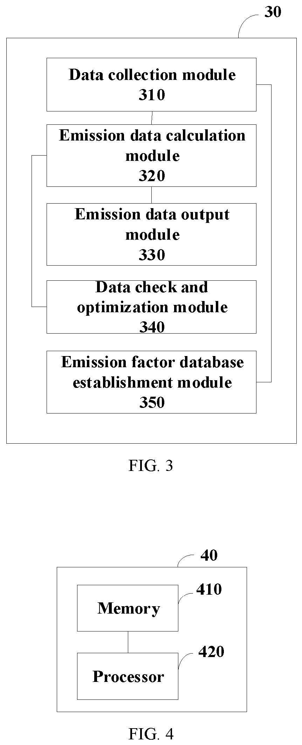

The present disclosure also provides a system for determining greenhouse gas emission data, as described below in conjunction with FIG. 3.

FIG. 3 is a block diagram of a system for determining greenhouse gas emission data, according to some embodiments of the present disclosure. As shown in FIG. 3, the system 30 of this embodiment includes: a data collection module 310, an emission data calculation module 320, and an emission data output module 330. The various modules of the system of FIG. 3 correspond to the various modules of FIG. 2.

The data collection module 310 is configured to collect transportation data of an order, wherein the transportation data of the order comprises information of goods, configuration parameters of one or more transportation vehicles of one or more waybills corresponding to the order, travelling data of the one or more transportation vehicles, and one or more emission factors corresponding to the one or more transportation vehicles.

In some embodiments, the data collection module 310 is configured to collect information of the order, where the information of the order includes the information of the goods and one or more serial numbers of the one or more waybills corresponding to the order; acquire information of the one or more waybills according to the one or more serial numbers of the one or more waybills, and associating the order with the one or more waybills, where different waybills correspond to different transportation sections of the order, and the information of each waybill comprises configuration parameters and travelling data of the transportation vehicle of the waybill; acquire an emission factor corresponding to the transportation vehicle of each waybill according to the configuration parameters of the transportation vehicle of each waybill; and generate the transportation data of the order.

The emission data calculation module 320 is configured to determine greenhouse gas emission data corresponding to each waybill of the one or more waybills according to the transportation data of the order.

In some embodiments, the configuration parameters of the transportation vehicle of each waybill include bearing capability information and an energy type of the transportation vehicle of each waybill, and the emission data calculation module 320 is configured to determine greenhouse gas emission data of the transportation vehicle of each waybill according to the energy type of the transportation vehicle of each waybill, the travelling data of the transportation vehicle of each waybill and an emission factor corresponding to the transportation vehicle of each waybill; and determine the greenhouse gas emission data corresponding to each waybill according to the information of the goods and the bearing capacity information of the transportation vehicle of each waybill.

In some embodiments, the emission data calculation module 320 is configured to determine a greenhouse gas emission model of the transportation vehicle of each waybill according to the energy type of the transportation vehicle of each waybill; and determine the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill.

In some embodiments, for each waybill, in a case where the energy type of the transportation vehicle of the waybill is fossil fuel, the greenhouse gas emission model of the transportation vehicle of the waybill includes a carbon emission model of fossil fuel vehicle, and the emission data calculation module 320 is configured to, for each waybill, in a case where the energy type of the transportation vehicle of the waybill is the fossil fuel, determine at least one of a carbon dioxide emission, a methane emission or a nitrous oxide emission of the transportation vehicle of the waybill according to the travelling data of the transportation vehicle of the waybill and at least one of a carbon dioxide emission factor, a methane emission factor or a nitrous oxide emission factor corresponding to the transportation vehicle of the waybill, by adopting the carbon emission model of fossil fuel vehicle; and determine a greenhouse gas emission of the transportation vehicle of the waybill according to at least one of the carbon dioxide emission, the methane emission or the nitrous oxide emission of the transportation vehicle of the waybill.

In some embodiments, the travelling data of the transportation vehicle of the waybill includes a travelling distance and a urea consumption of the transportation vehicle of the waybill, and the emission data calculation module 320 is configured to, determine a first emission of carbon dioxide of the transportation vehicle of the waybill according to a product of the travelling distance of the transportation vehicle of the waybill and the carbon dioxide emission factor corresponding to the transportation vehicle of the waybill; determine a second emission of carbon dioxide of the transportation vehicle of the waybill according to a product of the urea consumption of the transportation vehicle of the waybill and a conversion coefficient; and determine the carbon dioxide emission of the transportation vehicle of the waybill according to the first emission and the second emission of carbon dioxide of the transportation vehicle of the waybill.

In some embodiments, for the transportation vehicle of each waybill, the carbon dioxide emission factor corresponding to the transportation vehicle is determined according to a fossil fuel consumption per unit distance of the transportation vehicle, and liquid density, net calorific value, carbon content per calorific value, and carbon oxidation rate of the fossil fuel used by the transportation vehicle.

In some embodiments, the travelling data of the transportation vehicle of the waybill includes a travelling distance of the transportation vehicle of the waybill, and the emission data calculation module 320 is configured tothe methane emission of the transportation vehicle of the waybill according to a product of the travelling distance of the transportation vehicle of the waybill, the methane emission factor corresponding to the transportation vehicle of the waybill and global warming potential of methane; and determine the nitrous oxide emission of the transportation vehicle of the waybill according to a product of the travelling distance of the transportation vehicle of the waybill, the nitrous oxide emission factor corresponding to the transportation vehicle of the waybill and global warming potential of nitrous oxide.

In some embodiments, for each waybill, in a case where the energy type of the transportation vehicle of the waybill is electricity, the greenhouse gas emission model of the transportation vehicle of the waybill includes a carbon emission model of electric vehicle, the configuration parameters of the transportation vehicle of the waybill comprise an electricity consumption of the transportation vehicle of the waybill, and the emission data calculation module 320 is configured to, determine the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill comprising: for each waybill, in a case where the energy type of the transportation vehicle of the waybill is electricity, determine the greenhouse gas emission of the transportation vehicle of the waybill according to a product of the electricity consumption of the transportation vehicle of the waybill and an electric vehicle emission factor, by adopting the carbon emission model of electric vehicle.

In some embodiments, the emission data calculation module 320 is further configured to, for each waybill, in a case where the energy type of the transportation vehicle of the waybill is electricity, compare the greenhouse gas emission of the transportation vehicle of the waybill with a greenhouse gas emission of a reference fossil fuel vehicle, to determine a greenhouse gas emission reduction of the transportation vehicle of the waybill, where bearing capacity information of the reference fossil fuel vehicle is same with that of the transportation vehicle of the waybill; and determine a greenhouse gas emission reduction of the waybill according to the greenhouse gas emission reduction of the transportation vehicle of the waybill.

In some embodiments, the information of the goods includes a volume and a weight of the goods, the bearing capacity information includes capacity and load, and the emission data calculation module 320 is configured to, for each waybill, determine a first ratio of the volume of the goods to the capacity of the transportation vehicle of the waybill; determine a second ratio of the weight of the goods to the load of the transportation vehicle of the waybill; determine an emission ratio coefficient according to the first ratio and the second ratio; and determine the greenhouse gas emission data corresponding to the waybill according to the greenhouse gas emission data of the transportation vehicle of the waybill and the emission ratio coefficient.

The emission data output module 330 is configured to generate greenhouse gas emission data of the order according to the greenhouse gas emission data corresponding to each waybill.

In some embodiments, the emission data output module 330 is configured to perform at least one of: adding the greenhouse gas emission data corresponding to each waybill to determine total greenhouse gas emission of the order; or sequencing the greenhouse gas emission data corresponding to each waybill according to a transportation route of the order to form greenhouse gas emission track data of the order.

In some embodiments, the emission data output module 330 is configured to determine a greenhouse gas emission reduction of the order according to the greenhouse gas emission reduction of the transportation vehicle of each waybill.

In some embodiments, the system 30 further includes a data check and optimization module 340 configured to perform at least one of: checking an order of magnitude of the greenhouse gas emission data of the order, to determine whether the order of magnitude of the greenhouse gas emission data of the order meets a preset order of magnitude; or checking the greenhouse gas emission data corresponding to each waybill, to determine whether the data is duplicated or missing.

In some embodiments, the emission data output module 330 is configured to perform at least one of: displaying the greenhouse gas emission data of the order; displaying the information of the goods; displaying a transportation route of the order; displaying a type of the one or more transportation vehicles of the one or more waybills corresponding to the order; or displaying the transportation data of the order.

In some embodiments, the system 30 further includes an emission factor database establishing module 350 configured to, acquire configuration parameters of various transportation vehicles, to generate a transportation vehicle database. The emission factor database establishing module 350 is further configured to, acquire emission factors of various greenhouse gases; and generate emission factors corresponding to various transportation vehicles according to configuration parameters of various transportation vehicles, to construct an emission factor database.

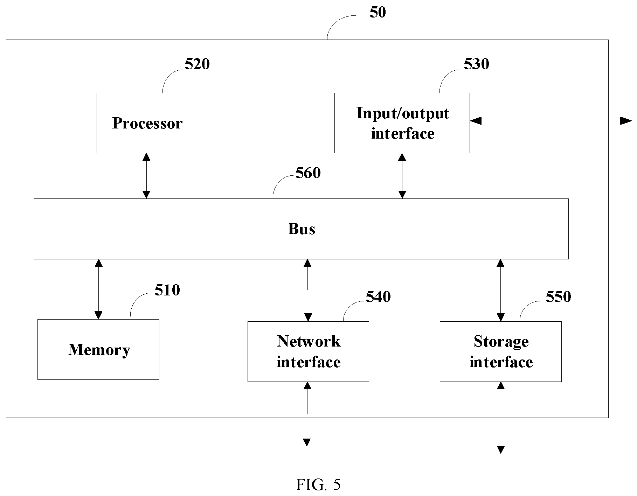

The system for determining greenhouse gas emission data in the embodiments of the present disclosure may each be implemented by various computing devices or computer systems, as described below in conjunction with FIGS. 4 and 5.

FIG. 4 is a block diagram of a system for determining greenhouse gas emission data, according to some embodiments of the present disclosure. As shown in FIG. 4, the system 40 of this embodiment includes: a memory 410 and a processor 420 coupled to the memory 410, the processor 420 being configured to perform the method for determining greenhouse gas emission data in any of the embodiments of the present disclosure based on instructions stored in the memory 410.

The memory 410 may include, for example, system memory, fixed non-volatile storage media, and the like. The system memory stores, for example, an operating system, an application, a Boot Loader, a database, and other programs.

FIG. 5 is a block diagram of a system for determining greenhouse gas emission data according to further embodiments of the present disclosure. As shown in FIG. 5, the system 50 of this embodiment includes: a memory 510 and a processor 520 similar to the memory 410 and the processor 420, respectively. Input/output interface 530, network interface 540, storage interface 550, etc. may also be included. These interfaces 530, 540, 550 and the memory 510 and the processor 520 may be connected, for example, through a bus 560. The input/output interface 530 provides a connection interface for input/output devices such as a display, a mouse, a keyboard, and a touch screen. The network interface 540 provides a connection interface for various networking devices, such as a database server or a cloud storage server. The storage interface 550 provides a connection interface for external storage devices such as an SD card and a USB disk.

According to some embodiments of the present disclosure, there is provided a computer-readable storage medium having stored thereon a computer program, which, when executed by a processor, implements the method for determining greenhouse gas emission data as in any of the embodiments of the present disclosure.

According to some embodiments of the present disclosure, there is provided a computer program product including: instructions which, when executed by a processor, cause the processor to perform the method for determining greenhouse gas emission data as in any of the embodiments of the present disclosure.

According to some embodiments of the present disclosure, there is provided a computer program including: instructions which, when executed by a processor, cause the processor to perform the method for determining greenhouse gas emission data as in any of the embodiments of the present disclosure.

As will be appreciated by one of skill in the art, the embodiments of the present disclosure may be provided as a method, system, or computer program product. Accordingly, the present disclosure may take the form of an entirely hardware embodiment, an entirely software embodiment or an embodiment combining software and hardware aspects. Furthermore, the present disclosure may take the form of a computer program product embodied on one or more computer-usable non-transitory storage media (including, but not limited to, disk storage, CD-ROM, optical storage, and so forth) having computer-usable program code embodied therein.

The present disclosure is described with reference to flow and/or block diagrams of methods, apparatuses (systems), and computer program products according to the embodiments of the disclosure. It will be understood that each flow and/or block of the flow and/or block diagrams, and combinations of flows and/or blocks in the flow and/or block diagrams, can be implemented by computer program instructions. These computer program instructions may be provided to a processor of a general purpose computer, special purpose computer, embedded processor, or other programmable data processing apparatus to produce a machine, such that the instructions, which executed via the processor of the computer or other programmable data processing apparatus, create means for implementing the functions specified in one or more flows in the flow diagram and/or one or more blocks in the block diagram.

These computer program instructions may also be stored in a computer-readable memory that can direct a computer or other programmable data processing apparatus to function in a particular manner, such that the instructions stored in the computer-readable memory produce an article of manufacture including instruction means for implementing the functions specified in one or more flows in the flow diagram and/or one or more blocks in the block diagram.

These computer program instructions may also be loaded onto a computer or other programmable data processing apparatus to cause a series of operational steps to be performed on the computer or other programmable apparatus to produce a computer implemented process, such that the instructions which executed on the computer or other programmable apparatus provide steps for implementing the functions specified in one or more flows in the flow diagram and/or one or more blocks in the block diagram.

The above only describes the preferred embodiments of the present disclosure but not limits the disclosure, and any modifications, equivalents, improvements and the like that are made within the spirit and principle of the present disclosure are intended to be included within the protection scope of the present disclosure.

**Claims**

1.  A method for determining greenhouse gas emission data, comprising:

    collecting transportation data of an order, wherein the transportation data of the order comprises information of goods, configuration parameters of one or more transportation vehicles of one or more waybills corresponding to the order, travelling data of the one or more transportation vehicles, and one or more emission factors corresponding to the one or more transportation vehicles;
    determining greenhouse gas emission data corresponding to each waybill of the one or more waybills according to the transportation data of the order; and
    generating greenhouse gas emission data of the order according to the greenhouse gas emission data corresponding to each waybill.

2.  The method for determining greenhouse gas emission data according to claim 1, wherein the configuration parameters of the transportation vehicle of each waybill comprise bearing capability information and an energy type of the transportation vehicle of each waybill and the determining greenhouse gas emission data corresponding to each waybill of the one or more waybills according to the transportation data of the order comprises:

    determining greenhouse gas emission data of the transportation vehicle of each waybill according to the energy type of the transportation vehicle of each waybill, the travelling data of the transportation vehicle of each waybill and an emission factor corresponding to the transportation vehicle of each waybill; and
    determining the greenhouse gas emission data corresponding to each waybill according to the information of the goods and the bearing capacity information of the transportation vehicle of each waybill.

3.  The method for determining greenhouse gas emission data according to claim 2, wherein the determining greenhouse gas emission data of the transportation vehicle of each waybill according to the energy type of the transportation vehicle of each waybill, the travelling data of the transportation vehicle of each waybill and an emission factor corresponding to the transportation vehicle of each waybill comprises:

    determining a greenhouse gas emission model of the transportation vehicle of each waybill according to the energy type of the transportation vehicle of each waybill; and
    determining the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill.

4.  The method for determining greenhouse gas emission data according to claim 3, wherein for each waybill, in a case where the energy type of the transportation vehicle of the waybill is fossil fuel, the greenhouse gas emission model of the transportation vehicle of the waybill comprises a carbon emission model of fossil fuel vehicle, and the determining the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill comprises:

    for each waybill, in a case where the energy type of the transportation vehicle of the waybill is the fossil fuel, determining at least one of a carbon dioxide emission, a methane emission or a nitrous oxide emission of the transportation vehicle of the waybill according to the travelling data of the transportation vehicle of the waybill and at least one of a carbon dioxide emission factor, a methane emission factor or a nitrous oxide emission factor corresponding to the transportation vehicle of the waybill, by adopting the carbon emission model of fossil fuel vehicle; and

determining a greenhouse gas emission of the transportation vehicle of the waybill according to at least one of the carbon dioxide emission, the methane emission or the nitrous oxide emission of the transportation vehicle of the waybill.

5. The method for determining greenhouse gas emission data according to claim 4, wherein the travelling data of the transportation vehicle of the waybill comprises a travelling distance and a urea consumption of the transportation vehicle of the waybill, and the carbon dioxide emission of the transportation vehicle of the waybill is determined by:

determining a first emission of carbon dioxide of the transportation vehicle of the waybill according to a product of the travelling distance of the transportation vehicle of the waybill and the carbon dioxide emission factor corresponding to the transportation vehicle of the waybill;
determining a second emission of carbon dioxide of the transportation vehicle of the waybill according to a product of the urea consumption of the transportation vehicle of the waybill and a conversion coefficient; and
determining the carbon dioxide emission of the transportation vehicle of the waybill according to the first emission and the second emission of carbon dioxide of the transportation vehicle of the waybill.

6. The method for determining greenhouse gas emission data according to claim 5, wherein for the transportation vehicle of each waybill, the carbon dioxide emission factor corresponding to the transportation vehicle is determined according to a fossil fuel consumption per unit distance of the transportation vehicle, and liquid density, net calorific value, carbon content per calorific value, and carbon oxidation rate of the fossil fuel used by the transportation vehicle.

7. The method for determining greenhouse gas emission data according to any of claims 4-6, wherein the travelling data of the transportation vehicle of the waybill comprises a travelling distance of the transportation vehicle of the waybill, and the methane emission of the transportation vehicle of the waybill is determined by:

determining the methane emission of the transportation vehicle of the waybill according to a product of the travelling distance of the transportation vehicle of the waybill, the methane emission factor corresponding to the transportation vehicle of the waybill and global warming potential of methane; and
the nitrous oxide emission of the transportation vehicle of the waybill is determined by:
determining the nitrous oxide emission of the transportation vehicle of the waybill according to a product of the travelling distance of the transportation vehicle of the waybill, the nitrous oxide emission factor corresponding to the transportation vehicle of the waybill and global warming potential of nitrous oxide.

8. The method for determining greenhouse gas emission data according to any of claims 3-7, wherein for each waybill, in a case where the energy type of the transportation vehicle of the waybill is electricity, the greenhouse gas emission model of the transportation vehicle of the waybill comprises a carbon emission model of electric vehicle, the configuration parameters of the transportation vehicle of the waybill comprise an electricity consumption of the transportation vehicle of the waybill, and
the determining the greenhouse gas emission data of the transportation vehicle of each waybill according to the travelling data of the transportation vehicle of each waybill and the emission factor corresponding to the transportation vehicle of each waybill, by adopting the greenhouse gas emission model of the transportation vehicle of each waybill comprises:
for each waybill, in a case where the energy type of the transportation vehicle of the waybill is electricity, determining the greenhouse gas emission of the transportation vehicle of the waybill according to a product of the electricity consumption of the transportation vehicle of the waybill and an electric vehicle emission factor, by adopting the carbon emission model of electric vehicle.

9. The method for determining greenhouse gas emission data according to claim 8, further comprising:

for each waybill, in a case where the energy type of the transportation vehicle of the waybill is electricity, comparing the greenhouse gas emission of the transportation vehicle of the waybill with a greenhouse gas emission of a reference fossil fuel vehicle, to determine a greenhouse gas emission reduction of the transportation vehicle of the waybill, wherein bearing capacity information of the reference fossil fuel vehicle is same with that of the transportation vehicle of the waybill; and

determining a greenhouse gas emission reduction of the waybill according to the greenhouse gas emission reduction of the transportation vehicle of the waybill.

10. The method for determining greenhouse gas emission data according to any of claims 2-9, wherein the information of the goods comprises a volume and a weight of the goods, the bearing capacity information comprises capacity and load, and the determining the greenhouse gas emission data corresponding to each waybill according to the information of the goods and the bearing capacity information of the transportation vehicle of each waybill comprises:

for each waybill, determining a first ratio of the volume of the goods to the capacity of the transportation vehicle of the waybill;
determining a second ratio of the weight of the goods to the load of the transportation vehicle of the waybill;
determining an emission ratio coefficient according to the first ratio and the second ratio; and
determining the greenhouse gas emission data corresponding to the waybill according to the greenhouse gas emission data of the transportation vehicle of the waybill and the emission ratio coefficient.

11. The method for determining greenhouse gas emission data according to any of claims 1-10, wherein the collecting transportation data of an order comprises:

collecting information of the order, wherein the information of the order comprises the information of the goods and one or more serial numbers of the one or more waybills corresponding to the order;
acquiring information of the one or more waybills according to the one or more serial numbers of the one or more waybills, and associating the order with the one or more waybills, wherein different waybills correspond to different transportation sections of the order, and the information of each waybill comprises configuration parameters and travelling data of the transportation vehicle of the waybill;
acquiring an emission factor corresponding to the transportation vehicle of each waybill according to the configuration parameters of the transportation vehicle of each waybill; and
generating the transportation data of the order.

12. The method for determining greenhouse gas emission data according to any of claims 1-11, wherein the generating greenhouse gas emission data of the order according to the greenhouse gas emission data corresponding to each waybill comprises at least one of:

adding the greenhouse gas emission data corresponding to each waybill to determine total greenhouse gas emission of the order; or
sequencing the greenhouse gas emission data corresponding to each waybill according to a transportation route of the order to form greenhouse gas emission track data of the order.

13. The method for determining greenhouse gas emission data according to any of claims 9-12, wherein the generating greenhouse gas emission data of the order according to the greenhouse gas emission data corresponding to each waybill comprises:
determining a greenhouse gas emission reduction of the order according to the greenhouse gas emission reduction of the transportation vehicle of each waybill.

14. The method for determining greenhouse gas emission data according to any of claims 1-13, further comprising at least one of:

checking an order of magnitude of the greenhouse gas emission data of the order, to determine whether the order of magnitude of the greenhouse gas emission data of the order meets a preset order of magnitude; or
checking the greenhouse gas emission data corresponding to each waybill, to determine whether the data is duplicated or missing.

15. The method for determining greenhouse gas emission data according to any of claims 1-14, further comprising at least one of:

displaying the greenhouse gas emission data of the order;
displaying the information of the goods;
displaying a transportation route of the order;
displaying a type of the one or more transportation vehicles of the one or more waybills corresponding to the order;

or

displaying the transportation data of the order.

16. The method for determining greenhouse gas emission data according to any of claims 1-15, further comprising: acquiring configuration parameters of various transportation vehicles, to generate a transportation vehicle database.

17. The method for determining greenhouse gas emission data according to any of claims 1-16, further comprising:

    acquiring emission factors of various greenhouse gases; and
    generating emission factors corresponding to various transportation vehicles according to configuration parameters of various transportation vehicles, to construct an emission factor database.

18. A system for determining greenhouse gas emission data, comprising:

    a data collection module configured to collect transportation data of an order, wherein the transportation data of the order comprises information of goods, configuration parameters of one or more transportation vehicles of one or more waybills corresponding to the order, travelling data of the one or more transportation vehicles, and one or more emission factors corresponding to the one or more transportation vehicles;
    an emission data calculation module configured to determine greenhouse gas emission data corresponding to each waybill of the one or more waybills according to the transportation data of the order; and
    an emission data output module configured to generate greenhouse gas emission data of the order according to the greenhouse gas emission data corresponding to each waybill.

19. A system for determining greenhouse gas emission data, comprising:

    a processor; and
    a memory coupled to the processor, configured to store instructions which, when executed by the processor, cause the processor to perform the method for determining greenhouse gas emission dataaccording to any of claims 1-17.

20. A computer-readable storage medium having stored thereon a computer program, which, when executed by a processor, implements the method for determining greenhouse gas emission data according to any of claims 1-17.

21. A computer program product comprising: instructions which, when executed by a processor, cause the processor to perform the method for determining greenhouse gas emission data according to any of claims 1-17.

22. A computer program comprising: instructions which, when executed by a processor, cause the processor to perform the method for determining greenhouse gas emission data according to any of claims 1-17.

| | |
|---|---|
| Collect transportation data of an order | S102 |

$\downarrow$

| | |
|---|---|
| Determine greenhouse gas emission data corresponding to each waybill of the one or more waybills according to the transportation data of the order | S104 |

$\downarrow$

| | |
|---|---|
| Generate greenhouse gas emission data of the order according to the greenhouse gas emission data corresponding to each waybill | S106 |

Fig.1

Fig.2

30

Data collection module
310

Emission data calculation
module
320

Emission data output
module
330

Data check and
optimization module
340

Emission factor database
establishment module
350

FIG. 3

40

410
Memory

420
Processor

FIG. 4

50

520

**Processor**

530

**Input/output interface**

560

**Bus**

510

**Memory**

540

**Network interface**

550

**Storage interface**

FIG. 5

## INTERNATIONAL SEARCH REPORT

| International application No. |
|---|
| **PCT/CN2024/106924** |

**A. CLASSIFICATION OF SUBJECT MATTER**

G06F 16/2457(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 订单, 运单, 能耗, 油, 电, 新能源, 二氧化碳, 温室气体, 排放, 因子, 重量, 体积, 距离, order, energy consumption, oil, electricity, new energy source, carbon dioxide, greenhouse gase, emission, factor, weight, volume, distance

**C. DOCUMENTS CONSIDERED TO BE RELEVANT**

| Category* | Citation of document, with indication, where appropriate, of the relevant passages | Relevant to claim No. |
|---|---|---|
| PX | CN 117235141 A (BEIJING JINGDONG YUANSHENG TECHNOLOGY CO., LTD. et al.) 15 December 2023 (2023-12-15) claims 1-20 | 1-22 |
| X | CN 116188225 A (CHINA RAILWAY TUNNEL GROUP CO., LTD. et al.) 30 May 2023 (2023-05-30) description, paragraphs 26-52 | 1-7, 10-22 |
| Y | CN 116188225 A (CHINA RAILWAY TUNNEL GROUP CO., LTD. et al.) 30 May 2023 (2023-05-30) description, paragraphs 26-52 | 8, 9 |
| Y | CN 115907170 A (MITATAN (SHANGHAI) INTELLIGENT TECHNOLOGY CO., LTD.) 04 April 2023 (2023-04-04) description, paragraphs 30-32 | 8, 9 |
| A | CN 114088143 A (QINGSHAN TECHNOLOGY CO., LTD. et al.) 25 February 2022 (2022-02-25) entire document | 1-22 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 September 2024** | **21 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/106924**

| C. | DOCUMENTS CONSIDERED TO BE RELEVANT | |
|---|---|---|
| Category* | Citation of document, with indication, where appropriate, of the relevant passages | Relevant to claim No. |
| A | CN 116049627 A (JINAN UNIVERSITY) 02 May 2023 (2023-05-02)<br>entire document | 1-22 |

Form PCT/ISA/210 (second sheet) (July 2022)

**INTERNATIONAL SEARCH REPORT**
Information on patent family members

International application No.

**PCT/CN2024/106924**

| Patent document cited in search report | | | Publication date (day/month/year) | Patent family member(s) | Publication date (day/month/year) |
|---|---|---|---|---|---|
| CN | 117235141 | A | 15 December 2023 | None | |
| CN | 116188225 | A | 30 May 2023 | None | |
| CN | 115907170 | A | 04 April 2023 | None | |
| CN | 114088143 | A | 25 February 2022 | None | |
| CN | 116049627 | A | 02 May 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311230187X